# EUROPEAN PATENT SPECIFICATION

(11) **EP 0 399 283 B1**
(45) Date of publication and mention of the grant of the patent: **27.09.1995**
(21) Application number: 90108625.6
(22) Date of filing: 08.05.1990
(51) Int. Cl.: H01H 83/20, H02H 1/06

(54) **An actuator device for emergency controls**
Betätigungsvorrichtung für Notsteuerung
Dispositif d'actionnement pour commande d'urgence

(30) Priority: 25.05.1989 IT 2064189
(43) Date of publication of application: 28.11.1990
(73) Proprietor: BTICINO S.P.A., 20122 Milano (IT)
(72) Inventor: Fontana, Rodolfo, I-21100 Varese (IT); Contardi, Augusto, I-21100 Varese (IT)
(74) Representative: Perani, Aurelio

(56) References cited:
- EP-A- 0 161 946
- FR-A- 2 420 840
- LU-A- 54 499
- US-A- 3 636 482
- US-A- 4 272 687

## Description

This invention relates to an actuator device for emergency controls, being of a type as described in the preamble of claim 1 and as known from FR-A1-2 420 840.

As is known, in some fields of application and when an emergency situation arises, there is a need for cutting off the supply to electrical equipment, even if the latter may be operating under a full-load condition.

Emergency control and stop devices have been provided for the purpose which, when operated as required can cut off the current supply by means of actuator devices.

Specifically, emergency controls are designed to operate on the power supply to systems wherein unforewarned or shock risks are likely to exist. Such is the case, for example, with pumping systems for inflammable liquids, thermal stations, central ventilating systems, calculators, etc.

Emergency stop devices are instead designed to operate on systems wherein the motions produced by electrically driven parts could become a source of danger. This is the case with moving staircases, lifts or elevators, belt conveyors, and certain machine tools.

In all cases, such control or stop devices are expected to act as directly as possible on the power lines and to be operable by a single drive action.

Such features are established by the Italian Standard for Systems CEI 64-8, which provides for the sectioning of power supply circuits to the above-specified areas subject to particular electrical, mechanical, or fire risks to be effected through positive security remote controls.

In an effort to meet the ruling standards, the prior art proposed in the past the use of so-called current bootstrap devices comprising a trip-off coil with a pushbutton in the closed position, see FR-A1-2 420 840. This approach cannot operate, however, in a voltage outing situation.

A current technique provides for the use of sectioning switches connected in the main supply circuit to the electric load and commonly referred to as positive security switches. These switches are equipped with and operated by low-voltage tripping means composed of large-size electromagnets having multiple wire turn coils.

Here too, problems have been encountered, however, from the necessity to have the trip-off means powered upstream of the switch, and from fluctuations in the mains voltage exciting untimely operation.

To ensure continued attendance, the coils of the trip-off means are kept constantly alive from storage batteries, see for example LU-A-54 499.

However, this has the disadvantage that the actuators occupy valuable space due to the bulk of the storage batteries and chargers therefor, the latter being, moreover, fairly expensive components.

In addition, the battery compartment requires constant ventilation to prevent hydrogen gas build-ups and consequent explosion risks.

The technical problem that underlies this invention is to provide an actuator device for emergency controls having peculiarly simple structural and functional features whereby it can fit the standard size of a DIN-type modular case (17.5 mm wide) and conform with the standards for "positive security", while overcoming the drawbacks previously outlined in connection with the prior art.

The solutive idea on which this invention stands is that of mechanically actuating the sectioning switch to trip off through a preset bistable trip-off means coupled thereto.

Based on this solutive idea, the technical problem is solved by an actuator device as indicated in claim 1.

The features and advantages of the inventive device will become apparent from the following detailed description of an embodiment thereof, with reference to the accompanying drawings.

In the drawings:
Figure 1 is a side view of the device according to the invention;
Figure 2 is a diagramatic view of the device shown in Figure 1; and
Figure 3 is a diagramatic and front view of the device in Figure 1, shown in an operating condition thereof.

With reference to the drawing views, generally shown at 1 is an actuator device embodying this invention and intended for emergency controls 2.

The device 1 is effective to trip-off a sectioning switch 20 so as to cut off the power supply to an electric load denoted by RL.

The load RL is powered through an electric line 4 wherein the switch 20 is connected which may be provided internally with conventional magneto-thermal protection arrangements.

The device 1 comprises a bistable trip-off means 3 having a trip-off linkage 5 and respective reset key 6.

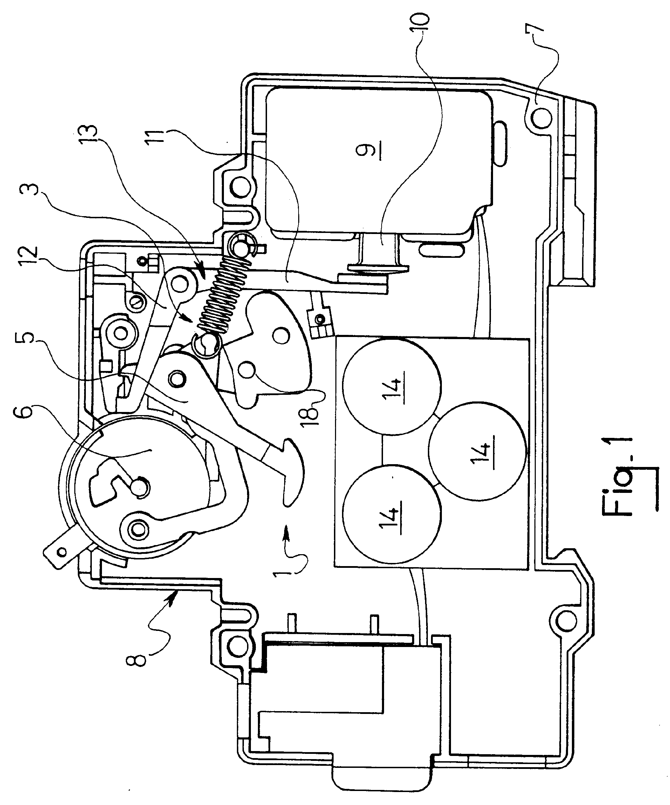

The trip-off means 3 is accommodated within a box-type case 8 of standard shape and size, such as of the type referred to as DIN module, measuring 17.5 mm in width. That case 8 is only depicted in Figure 1 by a half-shell 7 thereof.

The key 6 for the switch 3 is of the bistable type, and can accordingly be shifted from a first, or home position to a second, or set position, as shown in Figure 1.

Also housed within the case 8 is an actuating relay 9 having an interfering plunger 10 with the linkage 5.

More specifically, the linkage 5 comprises a small crank lever 13 pivoted on the half-shell 7 and having a first arm 11 with a feeler)like end acting on the plunger 10, and a second arm 12 arranged to actuate the linkage 5 and change the state of the trip-off means 3. The linkage 5 also includes a release pin 18 extending across an opening in the case 8, and through it, to the sectioning switch 20.

The case 8 is laid alongside and coupled to another similar module incorporating the sectioning switch 20, such that the pin 18 can act on the switch mechanism to mechanically effect the switch tripping.

The device 1 further comprises a back-up battery 14, particularly a re-chargeable NiCad one, which is connected to the relay 9 so as to keep it alive at all times. This battery is connected between a phase conductor F and a neutral conductor N of a two-wire electric supply line at 220 Volts.

Also provided is an electronic circuit 15 for re-charging the battery 14. This circuit 15 comprises a capacitor C connected in parallel to the battery, a diode D connected with one end to the battery and having the other end forward biased toward the phase conductor F via a series of a capacitor C1 and a resistor R. A Zener diode Z is, moreover, connected between the phase F and neutral N conductors, upstream of the diode D.

Advantageously, a means is provided of connecting at least one, normally closed, emergency control between the battery 14 and the relay 9. It may be appreciated that it would be possible for a plurality of normally closed controls 2 to be connected serially together, and installed at remote locations in the system such that by operating any one of them, the device 1 will be actuated in all cases.

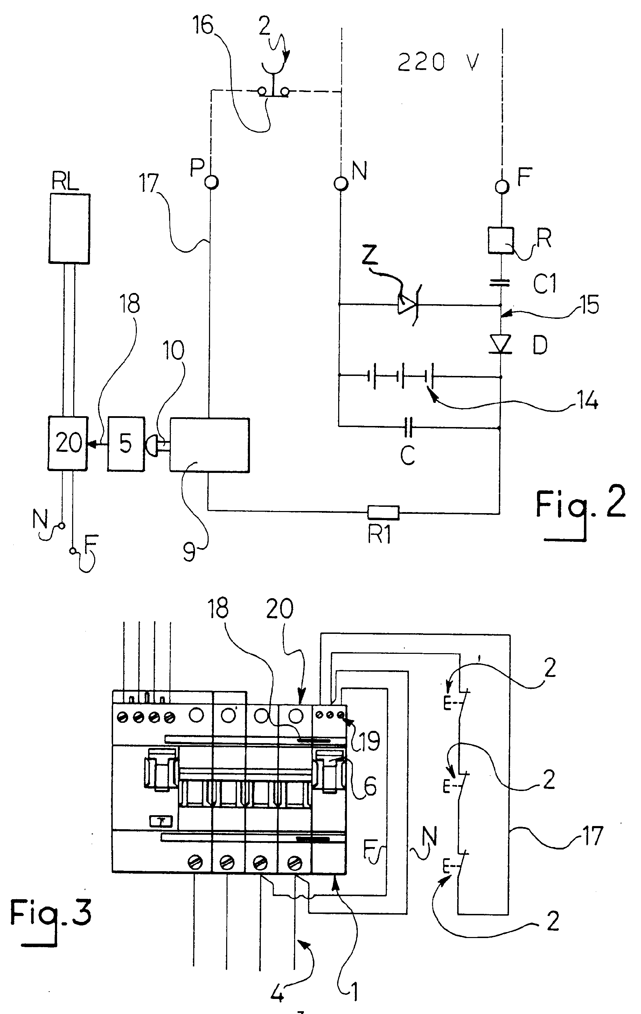

Said means comprises terminals, generally denoted by 19 and depicted in Figure 3, on the front of the case 8.

The operation of the device according to the invention will be now described.

The trip-off means 3 is preset manually to the closed contact position shown in Figure 1.

The relay 9 is kept constantly under power from the back-up battery 14 which is, in turn, kept in the charged state by the electronic circuit 15. The battery 14 is effective to keep the relay 9 alive and ensure continued attendance in the event of mains voltage outings.

On an emergency situation arising which requires interruption of the power supply to the load RL, it will be sufficient that the control pushbutton 16, normally closed, be acted upon directly to cut off the power supply to the relay when depressed, even in the absence of the mains voltage.

As a result, the plunger 10 of the relay will be released, and the lever 13 shifted by the plunger 10 to actuate the trip-off linkage 5 and change the state of the trip-off means, thereby the sectioning switch 20 coupled to it will be simultaneously tripped to the open position under the mechanical action of the pin 18.

A first advantage of the inventive device is that it is uniquely small in size, such that it can fit into a DIN module case.

A further advantage is that the device is also operational in the absence of mains voltage.

In addition, the changing of the trip-off means 3 state provides an indication of the emergency step having taken place by just the changed position of the control key 6, and this irrespective of whether the sectioning switch is, in turn, equipped with indicator devices adapted to indicate operation brought about by other causes, such as magneto-thermal protection, for example.

## Claims

1. An actuator device (1) for emergency controls (2), being of a type arranged to actuate a sectioning switch (20) connected in a power supply circuit (4) to an electric load (RL), so as to cut off the power supply to the load on the occurrence of an emergency or potentially dangerous situation, comprising:
a bistable trip-off means (3) coupled mechanically to said sectioning switch (20) and provided with a trip-off linkage (5) and respective reset key (6);
an actuating relay (9) whose plunger (10) is arranged to interfere with and act upon said linkage (5) so as to change the trip-off means (3) state; and
a housing (8) enclosing said bistable trip-off means (3) and said actuating relay (9);
characterized in that it comprises:
a back-up battery (14) connected to the relay (9);
an electronic circuit (15) for keeping said battery (14) charged; and
a means (19) of connecting at least one, normally closed emergency control switch (2) between the battery (14) and the relay (9) to keep the relay constantly alive;
said battery (14), said electronic circuit (15) and said means of connecting (19) being enclosed in said housing (8).

2. An actuator device according to Claim 1, characterized in that said electronic circuit (15) comprises:
an impedance means (R, C1) and a diode (D) connected in series between a first terminal (F) of said power supply circuit and a first pole of said back-up battery (14) and
a Zener diode (Z) connected between a second terminal (N) of said power supply circuit, connected to a second pole of said back-up battery (14), and the junction point between the impedance means (R, C1) and the diode (D).

3. An actuator device according to Claim 2, characterized in that said electronic circuit (15) comprises a capacitor (C) connected in parallel with the battery (14).

4. An actuator device according to any of the preceding Claims, characterized in that said battery (14) is of the NiCd type.

5. A device according to any of the preceding Claims, characterized in that said emergency control switch (2) is a pushbutton held normally closed.

6. A device according to any of the preceding Claims, characterized in that said housing (8) is a box-type DIN-module case.

## Patentansprüche

1. Betätigungsvorrichtung (1) für Notsteuerungen (2) der Art, die einen Trennschalter (20) betätigt, der in einer Stromversorgungsschaltung (4) mit einer elektrischen Last (RL) verbunden ist, so daß die Stromversorgung der Last beim Auftreten eines Notfalls oder einer potentiell gefährlichen Situation unterbrochen wird, die umfaßt:
eine Kipp-Auslöseeinrichtung (3), die mechanisch mit dem Trennschalter (20) verbunden und mit einem Auslöse-Verbindungsstück (5) sowie einer entsprechenden Rückstelltaste (6) versehen ist;
ein Betätigungsrelais (9), dessen Tauchkern (10) mit dem Verbindungsstück (5) in Kontakt ist und auf selbiges wirkt, um den Zustand der Auslöseeinrichtung (3) zu verändern; und
ein Gehäuse (8), das die Kipp-Auslöseeinrichtung (3) und das Betätigungsrelais (9) umschließt;
**dadurch gekennzeichnet**, daß sie umfaßt:
eine Pufferbatterie (14), die mit dem Relais (9) verbunden ist;
eine elektronische Schaltung (15), die die Batterie (14) geladen hält; und
eine Einrichtung (19), die wenigstens einen, normalerweise geschlossenen Notsteuerschalter (2) mit der Batterie (14) und dem Relais (9) verbindet, um das Relais konstant unter Spannung zu halten;
wobei die Batterie (14), die elektronische Schaltung (15) und die Einrichtung zur Verbindung (19) von dem Gehäuse (8) umschlossen sind.

2. Betätigungsvorrichtung nach Anspruch 1, **dadurch gekennzeichnet**, daß die elektronische Schaltung (15) umfaßt:
eine Impedanzeinrichtung (R, C1) sowie eine Diode (D), die in Reihe zwischen einen ersten Anschluß (F) der Stromversorgungsschaltung und einen ersten Pol der Pufferbatterie (14) geschaltet sind, und eine Zener-Diode (Z), die zwischen einen zweiten Anschluß (N) der Stromversorgungsschaltung, der mit einem zweiten Pol der Pufferbatterie (14) verbunden ist, und den Verbindungspunkt zwischen der Impedanzeinrichtung (R, C1) und der Diode (D) geschaltet ist.

3. Betätigungsvorrichtung nach Anspruch 2, **dadurch gekennzeichnet,** daß die elektronische Schaltung (15) einen Kondensator (16) umfaßt, der parallel zu der Batterie (14) geschaltet ist.

4. Betätigungsvorrichtung nach einem der vorangehenden Ansprüche, **dadurch gekennzeichnet**, daß die Batterie (14) vom NiCd-Typ ist.

5. Vorrichtung nach einem der vorangehenden Ansprüche, **dadurch gekennzeichnet**, daß der Notsteuerschalter (2) ein Druckknopf ist, der normalerweise geschlossen gehalten wird.

6. Vorrichtung nach einem der vorangehenden Ansprüche, **dadurch gekennzeichnet,** daß das Gehäuse (8) ein kastenartiges DIN-Modul-Gehäuse ist.

## Revendications

1. Dispositif d'actionnement (1) pour des commandes d'urgence (2), d'un type conçu pour actionner un commutateur (20) de sectionnement connecté dans un circuit (4) d'alimentation en énergie d'une charge électrique (RL), afin de couper l'alimentation en énergie de la charge lors de l'apparition d'une situation d'urgence ou potentiellement dangereuse, comportant :
un moyen bistable (3) de déclenchement couplé mécaniquement audit commutateur (20) de sectionnement et pourvu d'une tringlerie (5) de déclenchement et d'une clé respective (6) de réarmement ;
un relais (9) d'actionnement dont un plongeur (10) est conçu pour entrer en contact avec et agir sur ladite tringlerie (5) afin de modifier l'état du moyen (3) de déclenchement ; et
un boîtier (8) renfermant ledit moyen bistable (3) de déclenchement et ledit relais (9) d'actionnement**;**
caractérisé en ce qu'il comporte :
une batterie (14) de secours connectée au relais (9) ;
un circuit électronique (15) destiné à maintenir la batterie (14) chargée ; et
un moyen (19) de connexion d'au moins un commutateur (2) de commande d'urgence normalement fermé, entre la batterie (14) et le relais (9), pour maintenir le relais constamment excité ;
ladite batterie (14), ledit circuit électronique (15) et ledit moyen de connexion (19) étant enfermés dans ledit boîtier (8).

2. Dispositif d'actionnement selon la revendication 1, caractérisé en ce que ledit circuit électronique (15) comporte :
un moyen à impédance (R, C1) et une diode (D) montés en série entre une première borne (F) dudit circuit d'alimentation en énergie et un premier pôle de ladite batterie de secours (14), et
une diode (Z) Zener montée entre une seconde borne (N) dudit circuit d'alimentation en énergie, connectée à un second pôle de ladite batterie (14) de secours, et le point de jonction entre le moyen à impédance (R, C1) et la diode (D).

3. Dispositif d'actionnement selon la revendication 2, caractérisé en ce que ledit circuit électronique (15) comporte un condensateur (C) monté en parallèle avec la batterie (14).

4. Dispositif d'actionnement selon l'une quelconque des revendications précédentes, caractérisé en ce que ladite batterie (14) est du type NiCd.

5. Dispositif selon l'une quelconque des revendications précédentes, caractérisé en ce que le commutateur (2) de commande d'urgence est un bouton poussoir maintenu normalement fermé.

6. Dispositif selon l'une quelconque des revendications précédentes, caractérisé en ce que ledit boîtier (8) est une enveloppe de module DIN du type boîtier.
